(19) Europäisches Patentamt
European Patent Office
Office européen des brevets

(11) **EP 3 153 746 A1**

(12) **EUROPÄISCHE PATENTANMELDUNG**

(43) Veröffentlichungstag:
**12.04.2017 Patentblatt 2017/15**

(51) Int Cl.:
***F16J 1/16*** *(2006.01)*    ***F16J 1/18*** *(2006.01)*
***F02F 3/00*** *(2006.01)*

(21) Anmeldenummer: **16191841.2**

(22) Anmeldetag: **30.09.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(30) Priorität: **06.10.2015 DE 102015219265**

(71) Anmelder: **Mahle International GmbH
70376 Stuttgart (DE)**

(72) Erfinder: **LOCHMANN, Roland
71672 Marbach (DE)**

(74) Vertreter: **BRP Renaud & Partner mbB
Rechtsanwälte Patentanwälte
Steuerberater
Königstraße 28
70173 Stuttgart (DE)**

(54) **KOLBENBOLZEN**

(57) Die vorliegende Erfindung betrifft einen Kolbenbolzen (1) mit einer axialen Öffnung (3), wobei an einer Innenoberfläche der Öffnung (3) zumindest eine Verstärkungsrippe (4) angeordnet ist. Erfindungswesentlich ist dabei, dass

- die zumindest eine Verstärkungsrippe (4) schraubengangartig ausgebildet ist, oder
- mehrere Verstärkungsrippen (4, 4', 4") vorgesehen sind, die zusammen ein Wabenmuster (5) bilden.

Fig. 1

**Beschreibung**

Die vorliegende Erfindung betrifft einen Kolbenbolzen mit einer axialen Öffnung gemäß dem Oberbegriff des Anspruchs 1.

Aus der US 4,756,240 A ist ein gattungsgemäßer Kolbenbolzen mit einer axialen Öffnung bekannt, wobei an einer Innenoberfläche der Öffnung zumindest eine Verstärkungsrippe angeordnet ist. Hierdurch soll eine Belastungsoptimierung erreicht werden.

Der Kolbenbolzen stellt das kraftübertragende Verbindungsglied zwischen Kolben und Pleuel dar und wird durch die an ihm angreifenden Gas- und Massenkräfte auf Biegung sowie Querovalverformung und in bestimmten Querschnitten auch auf Scherung beansprucht, wobei sich sowohl der Kolbenbolzen als auch die Bolzennaben im Kolben bzw. im Pleuel elastisch verformen. Die im lastfreien Zustand oftmals zylindrischen, zueinander parallel liegenden Kontaktflächen von Kolbenbolzen und Bolzennaben krümmen und verkanten sich, so dass sich örtliche Flächenpressungsspitzen ausbilden können. Zusammen mit der in Umfangsrichtung der Bolzennaben wirkenden Zugspannung kann diese Beanspruchung auf Dauer die Schwingfestigkeit des Kolbenwerkstoffs überschreiten und zu Ermüdungsrissen im Bolzennabenscheitel, den sogenannten Nabenspaltrissen, führen. Um dies zu vermeiden, sind verformungsarme Kolbenbolzen, das heißt Bolzen mit großer Wanddicke erforderlich, die jedoch wiederum dem Bestreben nach möglichst geringen zu bewegenden Massen widerspricht.

Generell ist hierbei zu beachten, dass bei axial verlaufenden Verstärkungsrippen zwar der Biegewiderstand verbessert wird, jedoch der Bolzenquerovalverformung entgegengewirkt. Bei ringförmigen angeordneten Verstärkungsrippen hingegen wird der Widerstand gegen Querovalverformungen verbessert, jedoch der Biegewiderstand reduziert. In beiden Fällen verbessert sich somit lediglich eine der beiden Eigenschaften, während die andere sich verschlechtert.

Die vorliegende Erfindung beschäftigt sich daher mit dem Problem, für einen Kolbenbolzen der gattungsgemäßen Art eine verbesserte oder zumindest eine alternative Ausführungsform anzugeben, die sich durch eine Gewichtsoptimierung und eine reduzierte Biegung bzw. Querovalverformung auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, anstelle von bislang bekannten ringförmigen Verstärkungsrippen bzw. Axialverstärkungsrippen nun erstmals zumindest eine schräg verlaufende Verstärkungsrippe oder aber mehrere, ein Wabenmuster bildende Verstärkungsrippen vorzusehen. Der erfindungsgemäße Kolbenbolzen weist dabei zur Gewichtsreduzierung in bekannter Weise eine axiale Öffnung auf, wobei an einer Innenoberfläche dieser Öffnung zumindest eine solche Verstärkungsrippe angeordnet ist. Diese zumindest eine Verstärkungsrippe ist erfindungsgemäß schraubengangartig ausgebildet oder aber es sind gemäß einer zweiten alternativen aber gleichwertigen Ausführungsform mehrere Verstärkungsrippen vorgesehen, welche ein Wabenmuster bilden. Mit den erfindungsgemäß komplett neu gestalteten Verstärkungsrippen ist somit erstmals sowohl eine Erhöhung des Widerstandes gegen eine Querovalverformung als auch die Erhöhung des Biegewiderstandes des Kolbenbolzens möglich, was mit bislang lediglich in Axialrichtung oder in Umfangsrichtung verlaufenden Verstärkungsrippen nicht möglich war. Durch die Verstärkungsrippen vergrößert sich zudem die innere Oberfläche des Kolbenbolzens, wodurch dieser besser gekühlt und damit auch eine bessere Kühlung einer Kolbenbolzennabe im Kolben ermöglich wird. Hierdurch lässt sich insbesondere auch die Betriebssicherheit einer mit einem solchen Kolben ausgestatteten Brennkraftmaschine erhöhen. Durch die zumindest eine schraubengangartig ausgebildete Verstärkungsrippe kann zudem eine Drehbewegung des Kolbenbolzens in den Bolzennaben angeregt werden, wodurch ein sogenannter "Bolzensteher" vermieden und dadurch einem einseitigen Verschleiß entgegengetreten werden kann.

Bei einer vorteilhaften Weiterbildung der erfindungsgemäßen Lösung durchgeht die zumindest eine Verstärkungsrippe die Öffnung gleichläufig, das heißt entweder als rechtsgängige Schraube oder als linksgängige Schraubenlinie. Alternativ hierzu ist auch denkbar, dass zumindest zwei gegenläufige, schraubengangartige Verstärkungsrippen vorgesehen sind, die in einem mittleren Bereich des Kolbenbolzens voneinander beabstandet sind und sich dort demzufolge nicht berühren.

Bei einer weiteren vorteilhaften Ausführungsform der erfindungsgemäßen Lösung gemäß der zweiten Alternative, sind ringförmige Verstärkungsrippen und axiale Verstärkungsrippen vorgesehen, die sich kreuzen und zusammen das Wabenmuster bilden. Die ringförmigen bzw. die axialen Verstärkungsrippen können, müssen jedoch nicht unbedingt absolut gesehen in Axialrichtung bzw. in Umfangsrichtung verlaufend ausgerichtet sein, so dass auch eine bezüglich eines Winkels hiervon abweichende Ausrichtung der einzelnen Verstärkungsrippen möglich ist, wodurch sich ein rautenförmiges Wabenmuster ergibt. Bei exakt ringförmigen und exakt axialen Verstärkungsrippen hingegen ergibt sich ein rechteckförmiges Wabenmuster. Durch die Abweichung von einem rechten Winkel zwischen den axialen Verstärkungsrippen und den ringförmigen Verstärkungsrippen kann Einfluss auf spezielle Belastungsanforderungen genommen werden, wobei selbstverständlich auch denkbar ist, dass die das Wabenmuster bildenden Verstärkungsrippen hinsichtlich ihrer Höhe und/oder ihrer Breite über die Länge der Öffnung variieren und dadurch Bereiche unterschiedlicher Belastungstragfähigkeit erzeugen. Selbstverständlich können auch in Bereichen hoher Belastung kleinere Waben, das heißt enger aneinander anliegende Verstärkungsrippen vorgesehen werden.

Bei einer vorteilhaften Weiterbildung der erfindungsgemäßen Lösung weist zumindest eine Verstärkungsrippe einen trapezförmigen oder sinusförmigen Querschnitt auf. Besonders ein sinusförmiger Querschnitt stellt eine abgerundete Querschnittsform dar, die sich durch eine reduzierte Kerbwirkung auszeichnet.

Bei einer vorteilhaften Weiterbildung der erfindungsgemäßen Lösung kann die zumindest eine Verstärkungsrippe auch gehärtet sein, was aufgrund der vergrößerten Oberfläche der zumindest einen Verstärkungsrippe im Vergleich zur Innenoberfläche der Öffnung vergleichsweise einfach möglich ist.

Bei einer weiteren vorteilhaften Ausführungsform der erfindungsgemäßen Lösung ist ein Verhältnis einer Höhe h der zumindest einen Verstärkungsrippe zu einer Restwandstärke R des Kolbenbolzens wie folgt definiert: $0,1 < h/R < 2,0$ und bevorzugt $0,3 < h/R < 0,7$. Ein derartiges Verhältnis bietet dabei den großen Vorteil, dass durch größere Rippen eine bessere Kühlung des Kolbenbolzens sowie der Nabe im Betrieb erreicht werden kann.

Bei einer weiteren vorteilhaften Ausführungsform der erfindungsgemäßen Lösung ist ein Verhältnis einer Höhe h der zumindest einen Verstärkungsrippe zu einer Breite b der Verstärkungsrippe wie folgt definiert: $0,1 < h/b < 2,0$, bevorzugt $0,1 < h/b < 0,3$. Dabei ist selbstverständlich klar, dass sowohl dieses als auch das im vorherigen Absatz erwähnte Verhältnis sich über die axiale Länge des Kolbenbolzens ändern kann, wobei der beschriebene Bereich insbesondere Vorteile bietet hinsichtlich der Steifigkeit des Kolbenbolzens, da gilt: Je breiter die Verstärkungsrippen, desto höher wird die Steifigkeit des Kolbenbolzens.

Ist die zumindest eine Verstärkungsrippe schraubengangartig ausgebildet, so kann diese einen Steigungswinkel zwischen 0° und 90° aufweisen, das heißt eine sehr flache oder eine sehr steile Steigung besitzen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,

Fig. 1 eine Schnittdarstellung durch einen erfindungsgemäßen Kolbenbolzen mit einer axialen Öffnung und einer durchgehend gleichläufig und schraubengangartig ausgebildeten Verstärkungsrippe,

Fig. 2 eine Darstellung wie in Fig. 1, jedoch mit reduzierter Ganghöhe der Verstärkungsrippe,

Fig. 3 eine weitere Ausführungsform der gleichläufig durchgehenden, schraubengangartig ausgebildeten Verstärkungsrippe,

Fig. 4 mögliche Querschnittsformen von Verstärkungsrippen,

Fig. 5 eine Ausführungsform des erfindungsgemäßen Kolbenbolzens mit zwei gegenläufigen, schraubengangartigen Verstärkungsrippen,

Fig. 6 eine Darstellung wie in Fig. 5, jedoch bei reduzierter Ganghöhe,

Fig. 7 die zweite alternative Ausführungsform des erfindungsgemäßen Kolbenbolzens mit mehreren, ein Wabenmuster bildenden Verstärkungsrippen.

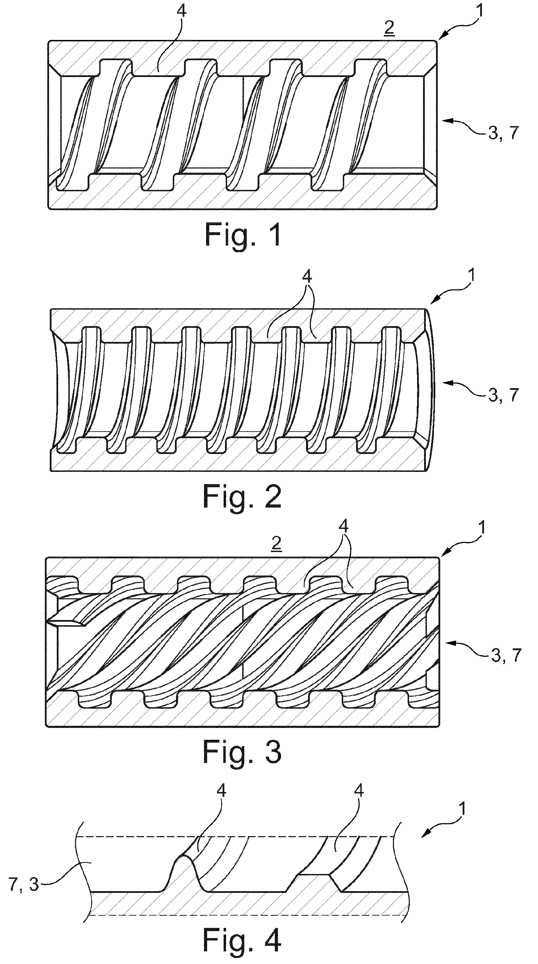

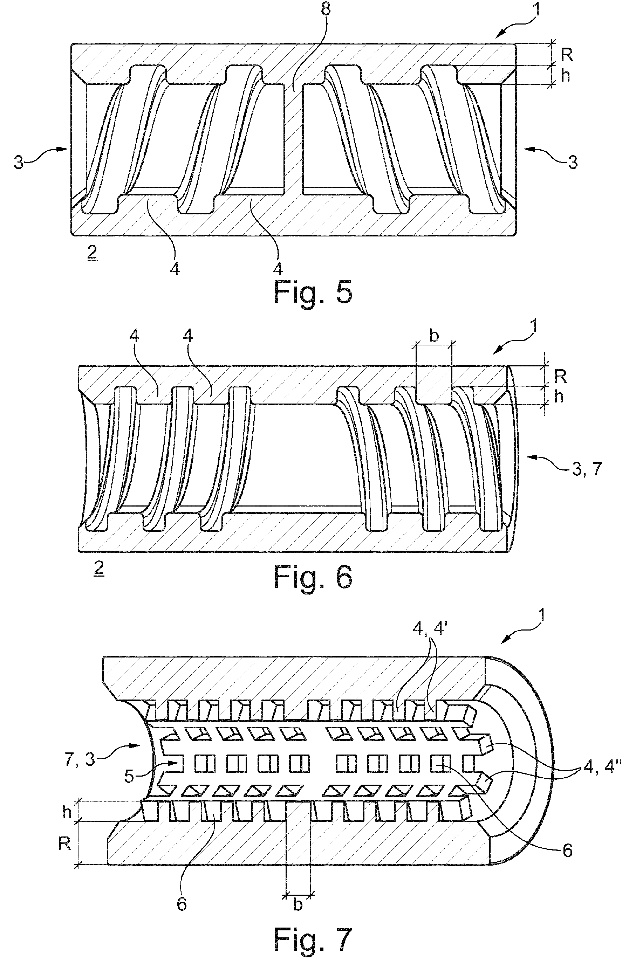

Entsprechend den Fig. 1 bis 7, weist ein erfindungsgemäßer Kolbenbolzen 1, der üblicherweise einen nicht gezeigten Kolben mit einem Pleuel in einer Brennkraftmaschine 2 koppelt, eine axiale Öffnung 3 auf, an deren Innenoberfläche zumindest eine Verstärkungsrippe 4 angeordnet ist. Erfindungsgemäß ist nun diese zumindest eine Verstärkungsrippe 4 schraubengangartig ausgebildet (vgl. Fig. 1 bis 3 und 5 und 6) oder aber es sind mehrere derartige Verstärkungsrippen 4 vorgesehen, die ein Wabenmuster 5 bilden (vgl. Fig. 7).

Die zumindest eine Verstärkungsrippe 4 kann dabei als schraubengangartige Verstärkungsrippe ausgebildet sein und die Öffnung 3 gleichförmig durchlaufen, wie dies bei den Ausführungsformen gemäß den Fig. 1 bis 3 dargestellt ist. Alternativ hierzu ist auch denkbar, dass zwei oder mehr gegenläufige, schraubengangartige Verstärkungsrippen 4 vorgesehen sind, wie dies gemäß den Fig. 5 und 6 dargestellt ist.

Bezüglich der Öffnung 3 ist vorstellbar, dass diese als den Kolbenbolzen 1 vollständig durchlaufende Durchgangsöffnung 7 ausgebildet ist oder dass ein Mittelsteg 8 vorhanden ist, der zwei jeweils als Sackloch ausgebildete Öffnungen 3 voneinander trennt. Ein derartiger Mittelsteg 8 ist in Fig. 5 beispielhaft dargestellt.

Betrachtet man das durch die Verstärkungsrippen 4 gebildete Wabenmuster 5 gemäß der Fig. 7, so kann man erkennen, dass zur Bildung des Wabenmusters 5 ringförmige Verstärkungsrippen 4' und axial verlaufende Verstärkungsrippen 4" vorgesehen sind. Die das Wabenmuster 5 bildenden Verstärkungsrippen 4', 4" können dabei selbstverständlich hinsichtlich ihrer Höhe h und/oder hinsichtlich ihrer Breite b über die Länge der Öffnung 3 variieren, wodurch sich beispielsweise unterschiedlich große Waben 6 und/oder unterschiedliche große Abstände zwischen den einzelnen Waben 6 bilden lassen, wodurch das Wabenmuster 5 auf die bereichsindividuellen Belastungen des Kolbenbolzens 1 ausgelegt werden kann.

Bei den einzelnen Verstärkungsrippen 4 gemäß den Fig. 1 bis 3 und 5 bis 7 ist zu erkennen, dass diese im Wesentlichen einen rechteckförmigen Querschnitt mit zum Teil abgerundeten Ecken aufweisen. Alternativ hierzu ist auch denkbar, dass zumindest eine Verstärkungsrippe 4 einen trapezförmigen oder einen sinusförmigen Querschnitt aufweist, wie dies beispielsweise bei den Verstärkungsrippen 4 gemäß der Fig. 4 dargestellt ist. Die Verstärkungsrippen 4 können darüber hinaus gehärtet sein, was aufgrund der vergrößerten Oberfläche der Versteifungsrippen 4 mittels eines schnelleren Abkühlprozesses problemlos möglich ist.

Bei einer vorteilhaften Weiterbildung der erfindungsgemäßen Lösung kann ein Verhältnis der Höhe h zumindest einer Verstärkungsrippe zu einer Restwandstärke R des Kolbenbolzens 1 wie folgt definiert sein:

$$0,1 < h/R < 2,0 \text{ und bevorzugt } 0,3 < h/R < 0,7.$$

Darüber hinaus kann auch ein Verhältnis einer Höhe h der zumindest einen Verstärkungsrippe 4 zu einer Breite b derselben wie folgt definiert sein:

$$0,1 < h/b < 1,0, \text{ bevorzugt } 0,1 < h/b < 0,3.$$

In den genannten Größenverhältnissen kann stets ein optimaler Kompromiss zwischen h, R und b (Höhe, Restwandstärke und Breite) erzielt werden, wodurch die Festigkeit, das Deformationsverhalten sowie das Gewicht beeinflusst werden. Ein Vorteil der hier beschriebenen Erfindung ist somit, dass man je nach Anforderung den Kolbenbolzen 1 auslegen kann durch entsprechende Anpassung der drei Parameter h, R, b (und Material).

Durch die erfindungsgemäß ausgebildeten Verstärkungsrippen 4 lassen sich sowohl ein Biegewiderstand als auch ein Widerstand gegen eine Querovalverformung erhöhen, und gleichzeitig das Gewicht des Kolbenbolzens 1 reduzieren, wodurch die bewegte Masse reduziert werden und gleichzeitig die Belastungsfähigkeit gesteigert werden kann.

Hergestellt werden können die Verstärkungsrippen 4 dabei beispielsweise durch eine spanende Bearbeitung der Innenoberfläche, durch einen Kaltfließprozess oder ein Pressen mit innenliegendem Formwerkzeug, wobei insbesondere die Herstellung des Wabenmusters 5 mit den einzelnen Waben 6 auch durch das Einsetzen bestimmter Salz- oder Sandkerne möglich ist. Ein solches Wabenmuster kann vorzugsweise auch durch ein Metallspritzgussverfahren (Metall-Matrix-Compound) aufgebracht werden. Hierbei sind hohe Genauigkeiten mit geringen Toleranzen möglich (Anwendung z.B. bei innenliegenden Zahnrädern). Je nach Werkstoffauswahl und -zusammensetzung kann somit auch die Härte, Wärmeleitfähigkeit, usw. angepasst werden.

**Patentansprüche**

1. Kolbenbolzen (1) mit einer axialen Öffnung (3), wobei an einer Innenoberfläche der Öffnung (3) zumindest eine Verstärkungsrippe (4) angeordnet ist, **dadurch gekennzeichnet, dass**

   - die zumindest eine Verstärkungsrippe (4) schraubengangartig ausgebildet ist, oder
   - mehrere Verstärkungsrippen (4, 4', 4") vorgesehen sind, die zusammen ein Wabenmuster (5) bilden.

2. Kolbenbolzen nach Anspruch 1, erste Alternative, **dadurch gekennzeichnet,** **dass** die zumindest eine Verstärkungsrippe (4) die Öffnung (3) gleichläufig durchgeht.

3. Kolbenbolzen nach Anspruch 1, erste Alternative, **dadurch gekennzeichnet,**

**dass** zumindest zwei gegenläufige, schraubengangartige Verstärkungsrippen (4) vorgesehen sind.

4.  Kolbenbolzen nach Anspruch 1, zweite Alternative,
    **dadurch gekennzeichnet,**
    **dass** ringförmige Verstärkungsrippen (4') und axiale Verstärkungsrippen (4") vorgesehen sind, die sich kreuzen und zusammen das Wabenmuster (5) bilden.

5.  Kolbenbolzen nach Anspruch 1, zweite Alternative oder Anspruch 4,
    **dadurch gekennzeichnet,**
    **dass** die das Wabenmuster (5) bildenden Verstärkungsrippen (4, 4', 4") hinsichtlich Höhe (h) und/oder Breite (b) über die Länge der Öffnung (3) variieren.

6.  Kolbenbolzen nach einem der vorhergehenden Ansprüche,
    **dadurch gekennzeichnet,**
    **dass** zumindest eine Verstärkungsrippe (4) einen trapezförmigen oder sinusförmigen Querschnitt aufweist.

7.  Kolbenbolzen nach einem der vorhergehenden Ansprüche,
    **dadurch gekennzeichnet,**
    **dass** ein Verhältnis einer Höhe (h) der zumindest einen Verstärkungsrippe (4) zu einer Restwandstärke (R) des Kolbenbolzens (1) wie folgt definiert ist,

$$0,1 < h/R < 2,0, \quad \text{bevorzugt } 0,3 < h/R < 0,7.$$

8.  Kolbenbolzen nach einem der vorhergehenden Ansprüche,
    **dadurch gekennzeichnet,**
    **dass** ein Verhältnis einer Höhe (h) der zumindest einen Verstärkungsrippe (4) zu einer Breite (b) der Verstärkungsrippe (4) wie folgt definiert ist,

$$0,1 < h/b < 2,0, \quad \text{bevorzugt } 0,1 < h/b < 0,3.$$

9.  Kolbenbolzen nach einem der vorhergehenden Ansprüche,
    **dadurch gekennzeichnet,**

    - **dass** die Öffnung (3) als den Kolbenbolzen (1) vollständig durchlaufende Durchgangsöffnung (7) ausgebildet ist, oder.
    - **dass** ein Mittelsteg (8) vorhanden ist, der zwei jeweils als Sackloch ausgebildete Öffnungen (3) voneinander trennt.

10. Brennkraftmaschine (2) mit zumindest einem Kolbenbolzen (1) nach einem der vorhergehenden Ansprüche.

Fig. 1

Fig. 2

Fig. 3

Fig. 4

## Fig. 5

## Fig. 6

## Fig. 7

**Europäisches Patentamt**
**European Patent Office**
**Office européen des brevets**

# EUROPÄISCHER RECHERCHENBERICHT

Nummer der Anmeldung

EP 16 19 1841

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | JP H06 8864 U (NA) 4. Februar 1994 (1994-02-04) | 1,2,6-10 | INV. F16J1/16 |
| A | * Abbildungen 1-2 * | 3-5 | F16J1/18 F02F3/00 |
| | ----- | | |
| X | US 1 684 862 A (GAY ALFRED F) 18. September 1928 (1928-09-18) | 1,2,6-10 | |
| A | * Ansprüche 1-8; Abbildungen 1, 3, 7 * | 3-5 | |
| | ----- | | |
| X | DE 10 48 752 B (R. BIBRACH) 21. Oktober 1959 (1959-10-21) | 1,3,6-10 | |
| A | * Ansprüche 1-3; Abbildung 1 * | 2,4,5 | |
| | ----- | | |
| X | JP H06 212931 A (SANSHIN KOGYO KK) 2. August 1994 (1994-08-02) | 1,3,6-10 | |
| A | * Zusammenfassung; Abbildungen 3,7 * | 2,4,5 | |
| | ----- | | |
| X | FR 800 533 A (FUSION MODERNE) 7. Juli 1936 (1936-07-07) | 1,4,6-10 | |
| A | * Anspruch 1; Abbildungen 1, 4-5 * | 2,3,5 | |
| | ----- | | |
| X | WO 2011/082815 A1 (MAHLE INT GMBH [DE]; LAPP MICHAEL T [US]; DINU DAN H [CA]; KRAUSE ROGE) 14. Juli 2011 (2011-07-14) | 1,4,6-10 | **RECHERCHIERTE SACHGEBIETE (IPC)** F16J |
| A | * Absatz [0015]; Ansprüche 1-21; Abbildung 1a * | 2,3,5 | F02F |
| | ----- | | |
| X | JP H01 97063 U (NA) 28. Juni 1989 (1989-06-28) | 1,5-10 | |
| A | * Abbildung 1 * | 2-4 | |
| | ----- | | |
| X | JP H02 57763 A (TOKAI TRW & CO) 27. Februar 1990 (1990-02-27) | 1,5-10 | |
| A | * Abbildungen 1-6 * | 2-4 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 23. Januar 2017 | Regaud, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 19 1841

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2017

| Im Recherchenbericht angeführtes Patentdokument | Datum der Veröffentlichung | Mitglied(er) der Patentfamilie | Datum der Veröffentlichung |
|---|---|---|---|
| JP H068864 U | 04-02-1994 | KEINE | |
| US 1684862 A | 18-09-1928 | KEINE | |
| DE 1048752 B | 21-10-1959 | KEINE | |
| JP H06212931 A | 02-08-1994 | KEINE | |
| FR 800533 A | 07-07-1936 | BE 407256 A<br>FR 800533 A | 23-01-2017<br>07-07-1936 |
| WO 2011082815 A1 | 14-07-2011 | BR 112012016819 A2<br>CN 103154537 A<br>EP 2521865 A1<br>US 2011162614 A1<br>WO 2011082815 A1 | 27-09-2016<br>12-06-2013<br>14-11-2012<br>07-07-2011<br>14-07-2011 |
| JP H0197063 U | 28-06-1989 | KEINE | |
| JP H0257763 A | 27-02-1990 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4756240 A